# EUROPÄISCHE PATENTANMELDUNG

(11) **EP 4 119 272 A1**
(43) Veröffentlichungstag der Anmeldung: **18.01.2023**
(21) Anmeldenummer: 21000188.9
(22) Anmeldetag: 16.07.2021
(51) Int. Cl.: B23D 55/08

(54) **SÄGEBANDFÜHRUNG FÜR BANDSÄGEN**

(71) Anmelder: Universitatea Stefan cel Mare Suceava - Romania, 720229 Suceava (RO)
(72) Erfinder: Gutt, Gheorghe, Suceava (RO); Popa, Valentin, Suceava (RO); Dimian, Mihai, Suceava (RO)

(57) **Zusammenfassung**

Die Erfindung betrifft eine präzise Führung der Sägebänder (**1**) vertikaler Bandsägen beim Schneiden von Halbzeugen aus Holz, Kunststoff, Eisen und Nichteisen Legierungen nach komplexen Konturen und engen Krümmungsradien. Erfindungsgemäß wird ein elastischer, kontinuierlicher und gleichmäßiger Druck auf die beiden Seiten (***A***) und (***B***) des schneidenden Sägebandes (**1**) ausgeübt und zugleich auch eine kontinuierliche rotierende Stütze und Führung der Rückseite (***C***) des Sägebandes gesichert.

## Beschreibung

Die Erfindung betrifft eine präzise mechanische drei Seiten Führung, eines Sägebandes bei vertikalen Bandsägen verwendet beim Linienschneiden und beim Schneiden nach komplexen Konturen mit kleinen Radien von Holz, Kunststoffen, Eisen und Buntmetallen.

Vertikale Bandsägen gehören zu denen am häufigsten verwendeten Maschinen in verschiedenen Gebieten derer Hauptanwendung ist aber in der Möbelindustrie und in Tischlereien. Die Schnittleistung der Bandsägen liegt nahe der Schnittleistung von Kreissägen, Der Einsatz der Ersteren ermöglicht das Schneiden von Halbzeugen und Rohlingen nach komplexen Konturen und kleinen Radien wobei die Rauheit der Schnittflächen geringer ist als beim Schneiden mit Kreissägen ebenfalls gibt es bei den Bandsägen geringe Holzverlusten, unter Form von Sägemehl.

Beim Schneiden von Holz und anderen Materialien mit vertikalen Bandsägen, nach komplexen Konturen und engen Radien, werden auf das Sägeband, durch die seitliche Beanspruchung erhebliche mechanische Biegemomente ausgeübt. Dieses hat zur Folge dass der Schnitt auf dem Halbzeug nicht dem vorgeschriebenen Weg entspricht. Die Präzision des Konturschneidens von Holz und anderen Materialien hängt von der Präzision der seitlichen Führung des Sägebandes und dem Ausmaß der sicheren Abstützung und auch Führung des Sägebandrückens während des Schneidvorganges ab.

Im Laufe der Zeit wurden verschiedene technische Lösungen verwendet, um das Sägeband zu führen. Die erste Lösung zur Führung war die Verwendung von statischen Holzführungen, mit Gleitreibung, die entsprechend der Dicke des Bandes einstellbar waren. Nachteil ist der vorzeitliche Verschleiß der Führungen und Überhitzung derer Kontaktflächen wegen der hohen Wärmeabgabe durch Reibung, dass zu zahlreichen Bränden geführt hat weil die Führungen, die sich unter dem Arbeitstisch befanden oft mit Holzstaub und Sägemehl bedeckt waren. Eine gewisse Verbesserung wurde erzielt, indem die Seitenführungen aus Textolith oder aus Sintermaterialien hergestellt wurden.

Spätere Lösungen verwendeten gehärtete Stahlscheiben zur Führung. Diese Lösungen werden auch heute noch in Bandsägen verschiedener Produzenten eingebaut. Zur seitlichen Führung werden zwei rotierende Führungsscheiben aus gehärtetem Stahl, deren Drehachse senkrecht zur Mitte der beiden Seitenflächen des Sägebandes steht, verwendet, wobei es zwischen den beiden Scheiben und dem Sägeband es ein leichtes, untermilimetrisches Spiel gibt. Durch die Tatsache dass das Sägeband bei der seitlicher Führung gleichzeitig an Oberflächen mit unterschiedlichen Radien der beiden Führungsscheiben in Kontakt ist ergeben sich unterschiedliche Winkelgeschwindigkeiten auf den Führungsscheiben dass zur Blockierung derer Rotation führt. Dieses bewirkt eine erhebliche lokale Erwärmung, hervorgerufen durch die Abbremsung des Sägebandes durch Gleitreibung . Ausnahme bildet die Situation bei der es während des Schneidens zu einem rein zufälligen intermittierendem Kontakt zwischen Führung und Sägeband kommt dass die Rotation kurzzeitig ermöglicht. Um der letzten Situation zu entsprechen muss zwischen Sägeband und den beiden Führungsscheiben ein minimaler Schlupf gesichert werden. Der fehlende kontinuierliche Kontakt zwischen Band und Führung ergibt Seinerseits beim Schneiden, nach komplexen Konturen und engen Radien, erhebliche Abweichungen zwishem der realen und der gezeichneten Schnittlinie. Zur Abstützung des Sägebandrückens wurde und wird auch heute noch eine rotierende gehärtete Stahlscheibe verwende derer Drehachse senkrecht auf den Sägebandrücken fällt aber radial zu diesem versetzt ist, sodass das Sägeband auf das letzte Drittel oder Viertel des Radiuses der rotierenden Stahlscheibe fällt. Die Drehung der Abstützscheibe erfolgt rein zufällig und nur dann, wenn das Sägeband die Scheibe punktförmig an einer einzigen Stelle berührt und nicht an zwei gegenüberliegenden Stellen, wie dies beim Schneiden von Halbzeugen klassisch der Fall ist. In dieser Situation verhält sich das Sägeband wie eine Sehne eines Kreissegmentes. Weil das Sägeband nicht mit der gehärtete Stahlscheibe rotieren kann bremst dieses durch Reibung die Drehung der Scheibe teilweise oder vollständig dass letztendlich zu derer Blockierung führt. Die Gleitreibung ohne Rotierung der Abstützscheibe führt mit der Zeit zur Bildung von Kanälen in der Letzteren, die nachher auch bei zufälligen an punktförmigen Berührungen an einer einzigen Stelle derer nachträgliche Drehung verhindern. Die Gleitreibung Metall - Metall, zwischen Stützscheibe und Sägeband bei Lineargeschwindigkeiten die für das Holzschneiden mit Bandsägen im Bereich 15m/s-25 m/s liegen, führt auch zu erheblichen und gefährlichen lokalen Erwärmungen. In der Abstützscheibe erreicht die Temperatur oft Werte über 450 C°, dass beim Schneiden zur Entzündung von Holzstaub und Sägemehl führen kann. Eine leicht verbesserte Situation wurde durch den Ersatz der gehärteten Stahl Abstützscheibe durch gesinterte Keramikscheiben erreicht.

Den Autoren ist auch eine andere konstruktive Lösung bekannt, bei der zur seitlichen Fürung des Sägebandes zwei gehärtete Stahlrollen verwendet werden die in Bronzebuchsen oder Gusseisenbuchsen laufen. Diese Rollen führen jede eine der beiden parallelen ebenen Flächen des Sägebandes. Zur Abstützung der Rückenseite des Sägebandes ist eine der beiden Rollen auf der Hinterenseite mit einem Ring versehen dessen Durchmesser größer ist als der Rollendurchmesser. Bei dieser Lösung erfolgt die seitliche Führung des Sägebandes durch eine Wäzlagerung und die hintere Abstützung durch Gleitlagerung. Um die Steifigkeit des Sägebandes beim Schneiden nach komplexen Konturen zu erhöhen, haben einige Hersteller die Position der Rotationsaxen der beiden seitlichen Führungsrollen vertikal versetzt.

Ausgehend von den Vorteilen der Umwälzreibung zur Gleitreibung verwenden neuzeitliche beidseitige Führungssysteme mit radialen Kugellagern derer Aussenringe am Sägeband mit engem Schlupf anliegen und bei dessen linearem Schneidweg fast vollständige Umdrehungen ausführen. Die Kugellager sind ihrerseits verstellbar auf einem Stahlkörper montiert so dass sie an die unterschiedlichen Dicken und Breiten der verwendeten Sägebänder angepasst werden können.

Zur Abstützung des Sägebandrückens wird ebenfalls ein Radiallager mit glattem Aussenring verwendet. Bei einigen konstruktiven Lösungen gibt es mittig am Außenring einen Radialkanal der neben der Abstützung des Sägebandes auch die Funktion eines zusätzliche Führung dessen hat.Diese den Autoren aus kommerzieller Angeboten bekannten Lösungen haben den Vorteil, dass sie das Auftreten von Reibungskräften durch Gleiten vollständig beseitigen, wobei alle auftretende Reibungskräfte nur durch Umwälzen erzeugt werden.

Nachteilig an diesen letzten Lösungen ist jedoch, dass beim Versuch, Holzhalbzeuge mit komplexer Kontur und engen Krümmungsradien zu schneiden, erhebliche Abweichungen des realen Schnittes von der Konturzeichnung auftreten. Dieses beruht auf der Tatsache dass beidseitig des Sägebandes ein Montagespielraum vorhanden ist, der bei der Verfolgung des Schnittlinie, durch seitliche Belastung seinen Wert fast verdoppelt, weil die beiseitige Montagespielräume nur auf eine Seite des Sägebandes übertragen werden.

Die Abstützung des Sägebandrückens durch Kugellager weist bei diesen Lösungen entweder keinen Führungskanal im Abstützkugellager auf, oder wenn es einen solchen gibt trägt dieser nur unwesentlich zur Gewährleistung einer zusätzlichen Steifigkeit und zusätzlichen seitlichen Führungen des Sägebandes bei da er mit einer Öffnung hergestellt ist die ein breites Spektrum an Sägebanddicken abdeckt.

Die von der Erfindung gelöste Aufgabe besteht in der Realisierung einer Führung für Sägebänder der vertikalen Bandsägen, die zum präzisen Schneiden von Halbzeug nach komplexen Konturen und engen Krümmungsradien verwendet wird.

Beim Schneiden nach einer komplexen Kontur und engen Krümmungsradien wirken auf das Sägeband erhebliche seitliche Biegekräfte, die verhindern, dass beim Schneiden die vorgegebene Konturlinie genau verfolgt werden kann. Die erfindungsgemäße Sägebandführung beseitigt diesen Nachteil durch die kontinuierliche Ausübung eines elastischen Druckes auf die Seitenflächen des Sägebandes mittels einer Zugfeder mit starrer Kennlinie und Radialkugelllagern. Je höher die Tendenz zu seitlicher Biegeneigung des Sägebandes ist, desto grösser ist die Reaktionskraft der Feder, dass eine präzise Schnittrichtung gewährleistet. Die Führung enthält auch ein rotierende Einheit, welche an unterschiedliche Sägebanddicken angepasst werden kann, und sowohl zur Stützung der Rückseite des Sägebandes als auch zu dessen zusätzlichen seitlichen Führung beiträgt.

Konstruktiv wird die seitliche Führung des Sägebandes mit einem elastischen Drucksystem hergestellt, das aus zwei identischen mechanischen Strukturen besteht, die sich auf beiden Seiten des Sägebandes befinden. Jede dieser Strukturen enthält einen gehärteten Stahlbolzen mit zwei zylindrischen Segmenten, die eine Exzentrizität von 1 mm zueinander aufweisen. Eines der zylindrischen Segmente kann im Körper der Führung, in einer Bronzebuchse um seine Symmetrieachse eine kurze Winkelrotation durchführen. Das andere zylindrische Segment, dass sich auf der exzentrischen Seite befindet, dient je nach Baugröße der Säge als Support für ein oder zwei Radialkugellager deren Außenringe, in direktem Kontakt mit dem Sägeband sind und eine präzise Führung dessen,während Schneidvorganges,sichern.

Erfindungsgemäß wird zur Abstützung und Führung des Sägebandrückens ohne Spiel auch eine rotierende Einheit verwendet die aus einem radialen Kugellager, auf dass ein gehärteter Stahlmantel aufgepresst ist. Im Stahlmantel ist ein kreisförmiger Kanal eingebracht, dessen Öffnung der Dicke des Sägebandes entspricht. Um eine enge Toleranz zwischen den verschiedenen derzeit verwendeten Sägebändern und der Öffnung des Führungskanals zu gewährleisten werden drei oder mehrere, schnell auswechselbare rotierenden Stütz- und Führungseinheiten für den Sägebandrücken, verwendet. Jede dieser Einheiten hat einen anderen Wert für die Öffnung des Führungskanals der seinerseits einer üblichen Dicke eines gewissen Sägebandes entspricht.

Beim Wechseln eines Sägebandes einer bestimmten Dicke gegen ein Sägeband einer anderen Dicke wird schnell auch die rotierende Stütz- und Führungseinheit mit einer neuen Einheit gewechselt die einen Führungskanal aufweist, dessen Öffnung der Dicke des Sägebandes entspricht.

Um die Entfernung eines Sägebandes und dessen Ersetzung durch ein anderes Sägeband zu gewährleisten werden die radialen lateralen Führungskugellager von der Bandsäge entfernt, um einen 2 mm schlupf zu bilden. Dieses geschieht durch die Handbetätigung von zwei Stahlhebeln die ihrerseits eine Zugfeder mit starrer Kennlinie spannen und zugleich auch die zwei Exzenterbuchsen mit einem kleinen Winkel rotieren, dass seinerseits zur Distanzierung der radialen Kugellager von dem Sägeband führt.

Durch Verwendung eines elastischen Drucksystems ohne Spiel, ausgeübt mit Hilfe einer Zugfeder und radialen Kugellagern und auf die Seitenflächen des Sägebandes und durch Verwendung einer rotierenden Einheit zur Stützung und Führung ohne Spiel der Rückseite des Sägebandes gibt es den Vorteil bei komplexen Konturen und engen Krümmungsradien präzise Schnitte zu erzielen.

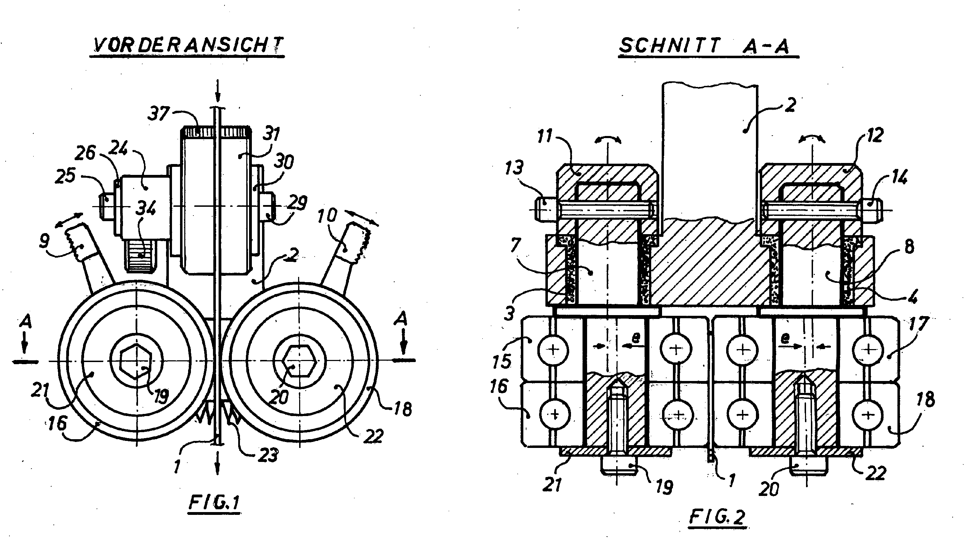

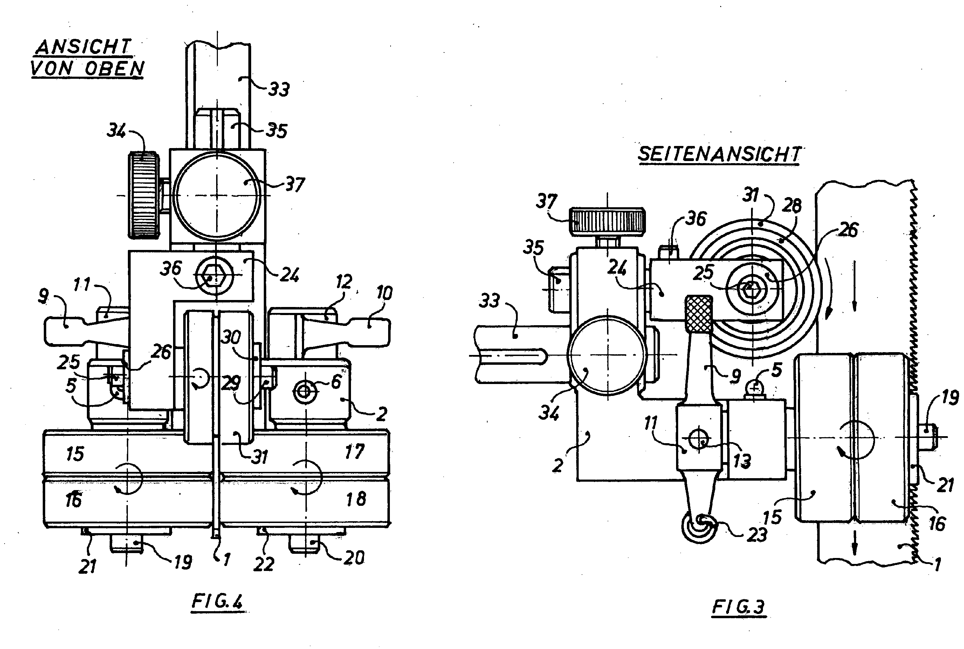

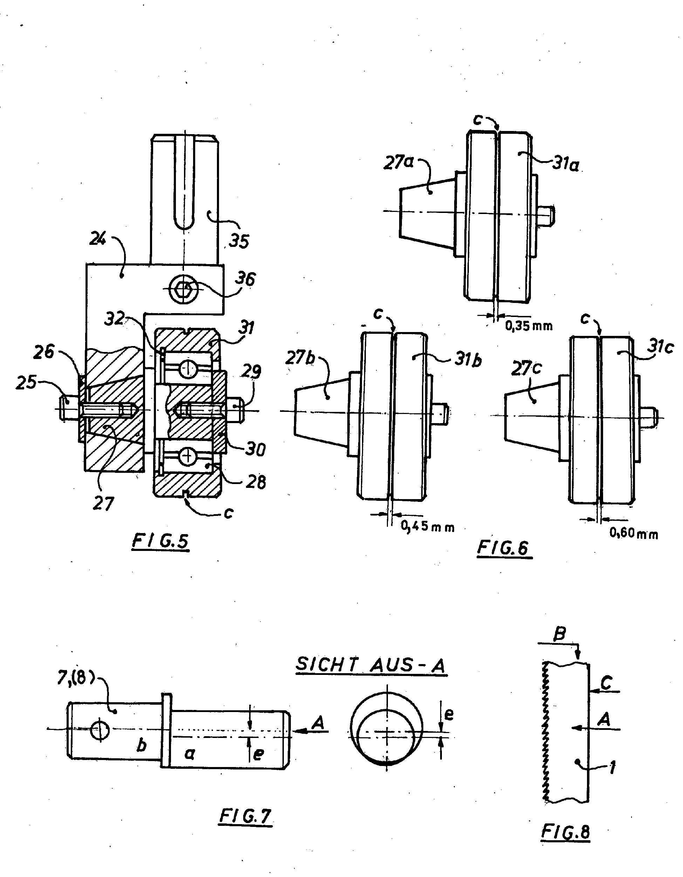

Eine Beispiel der Bauform für die Sägebandführung wird in Verbindung mit Fig.1, Fig.2, Fig.3, Fig.4, Fig.5, Fig.6, Fig.7 und Fig.8 wie folgt gezeigt :
- Fig.1: - Vorderansicht der Sägebandführung ;
- Fig.2: - Schnitt durch die Sägebandführung (aus der Vorderansicht);
- Fig.3: - Seitenansicht der Sägebandführung;
- Fig.4: - Sicht von oben der Sägebandführung;
- Fig.5: - Ansicht des Abstütz-und Führungskörpers für die Rückseite des Sägebandes;
- Fig.6: - Ansichten der auswechselbaren rotierenden Stütz-und Führungseinheiten für Rückseite des Sägebandes
- Fig.7: - Ansicht des Exzenterbolzens;
- Fig.8: - Ansicht eines Segments des Sägebandes mit Anzeige des Kontaktbereichs mit den seitlichen Führungskugellagern und mit der Anzeige des Kontaktbereichs mit dem rotierenden Abstütz- und der Rückseite des Sägebandes.

Die Erfindung dient zur Sicherung einer präzisen beidseitigen Führung der paralellen Seiten ***A*** und ***B*,** eines Sägebandes **1** bei vertikalen Bandsägen, sowie zur Abstützung und Führung dessen Rückseite ***C***. Eine vertikale Bandsäge verwendet zwei identische Führungen so wie in der Erfinfdung. Eine Führung befindet sich über dem Arbeitstisch der Säge und ist auf einer vertikalen Stange montiert, die entsprechend der Dicke des Halbzeugs höhenverstellbar ist, und die zweite Führung ist starr unter dem Arbeitstisch auf dem Stahl - oder Gußeisenramen der Bandsäge montiert.

Für die Führung der Seiten ***A*** und ***B,*** des Sägebandes **1** wird ein Stahlkörper **2,** zwei Buchsen **3** und **4** aus Bronze, zwei Schmiermagazine **5** und **6** mit Vaseline, zwei Stahlbolzen **7** und **8** aus gehärtetem Stahl mit jeweils zwei zylindrischen Segmenten ***a*** und ***b*,** wobei die Symmetrieachse des zylindrischen Segments ***a*** von der Symmetrieachse des zylindrischen Segments ***b*** versetzt ist, wodurch sich eine Exzentrizität ***e*** mit einem Wert von 1 mm ergibt, zwei Stahlhebel **9** und **10** angeschweißt an zwei Stahlkörper **11** und **12** die ihreseits mit zwei Schrauben **13** und **14** an die Stahlbolzen **7** und **8** angezogen und gesichert sind, vier Radialkugellager **15,16,17** und **18** zur seitlichen Führung, zwei Schrauben **19** und **20** und zwei Unterlegscheiben **21** und **22** zum Festziehen der Lager und eine Zugfeder **23** mit einer starren Federkennlinie, verwendet.

Die rotierende Einheit zur Abstützung und Führung des Rückens ***C*** des Sägebandes **1** besteht aus einem Stahlsupport **24** , in dem mit Hilfe einer Schraube **25** und einer Unterlegscheibe **26** ein austauschbarer Körper **27** aus gehärtetem Stahl, montiert ist und der sich seinerseits aus einem kegelstumpfförmigen Abschnitt, verlängert mit einem zylindrischen Abschnitt, gebildet ist wobei auf den Letzteren ein Radialkugellager **28,** mit einer Schraube **29** und einer ebene Unterlegscheibe **30** festgezogen ist. Auf das Kugellager **28** ist ein gehärteter Stahlmantel **31** aufgepresst der im mittleren Bereich einen radialen Kanal mit parallelen ebenen Wänden aufweist und mit einem elastischen Seeger Ring **32** blockiert ist.

Um die Rückseite des Sägebandes für die gängigsten Sägebänder optimal zu stützen und zu führen, werden drei austauschbarer Körper **27a,27b und 27c** gehärtetem Stahl verwendet, die durch einfache und schnelle Vorgänge in der kegelstumpfförmigen Aufnahme des Stahlsupports **24** montiert werden. Die Stahlmäntel **31a, 31b** und **31c** aus gehärtetem Stahl haben jeweils einen kreisförmigen Kanal ***c*** mit Öffnungen von: 0,35 mm, 0,45 mm und 0,60 mm, wobei jeder Kanal eine Tiefe von 1,2 mm aufweist.

Der Bau der Führung umfasst auch eine zylindrische Stahlstange **33** und eine Rändelschraube **34,** für die grobe Annäherung der Führung an das Sägeband **1** damit es in den Spalt zwischen den Kugellagerpaaren **15,16** und **17,18** eintritt. Zur Führung gehöhrt noch eine zylindrische Stahlstange **35** zur Bewegen des Stahlsupportes **24** in Richtung des Sägebandrückens sowie eine Schraube **36** zum Verbinden der Stange **35** mit dem Support **24.** Nachdem die Rückseite der Bandsäge **1** mit dem Boden des Kanals c des gehärteten Stahlmantels **31** in Kontakt kommt wird die Stange **35** mit einer gerändelten Schraube **37** blockiert.

Für die beschriebene Ausführungsform umfasst die Montage der oberen und unteren Führung Arbeitsgänge wie folgt:
a - Die obere Sägebandführung wird auf die vertikale beweglichen Stange der Bandsäge montiert, die sich über dem Arbeitstisch befindet und die das Absenken des Führung bis dem zu schneidenden Halbzeug gewährleistet, wonach die Säule mit einer Handschraube blockiert wird;
b - Die gerändelte Schraube **34** wird gelöst und nachher die oberhalb des Arbeitstisches befindliche Sägebandführung zum Sägeband **1** so verschiebt, bis dieses zwischen den radialen Kugellagerpaaren **15,16,17** und **18** auf einer Tiefe entsprechend seiner Breite, (ohne die Breite der Schneidzähne), liegt;
c - Die gerändelte Schraube **34** wird angezogen;
d - Die gerändelte Schraube **37** wird gelöst und der Stahlsupport **24** wird in Richtung des Sägebandes **1** geschiebt bis dessen Rückseite im Boden de Kanalc ***c*** des gehärteten Stahlmantels **31** anliegt;
e - Die gerändelte Schraube **37** wird angezogen;
f - Die untere Sägebandführung, die sich unmittelbar unter dem Arbeitstisch befindet, wird Metallrahmen der Bandsäge verschraubt;
Für die die untere Sägebandführung, die sich unmittelbar unter dem Arbeitstisch befindet, werden die Arbeitsgänge b bis f durchgeführt. Nach Durchlaufen dieser Arbeitsgänge ist die Bandsäge betriebsbereit.

Wenn das Sägeband **1** durch ein anderes Sägeband ersetzt werden muss, das eine Dicke hat die nicht in die Öffnung des kreisförmigen Kanals des gehärteten Stahlmantels **31** passt, wird der verwendete austauschbare Körper **27** mit einem anderen ersetzt dessen Öffnung des Führungskanals der Dicke des neuen Sägebandes entspricht. Das Wechseln der austauschbaren Körper **27** ist schnell und einfach durch Lösen der Mutter **25,** das Entfernen der bestehenden Körpers **27,** Einsetzen des neuen geeigneten Körpers **27** und Anziehen der Mutter **25,** durchzuführen.

## Patentansprüche

1. Die Erfindung Sägebandführung, bestehend aus den Radiallkugellagern **(15),(16),(17),(18)** und **(28)** und einer Zugfeder **(23), dadurch gekennzeichnet, dass**, um bei vertikalen Bandsägen das Schneiden nach einer komplexen Kontur, mit kleinen Krümmungsradien mit hoher Präzision zu sichern, erfindungsgemäß ein elastischer, kontinuierlicher und gleichmäßiger Druck auf die beiden Flächen (***A***) und (***B***) des sich bewegenden Sägebandes (**1**) ausgeübt wird sowie eine rotierende kontinuierliche drehende Stütze und Führung auf der Rückseite **(*C*)** des Sägebandes versehen wird.

2. Sägebandführung nach Anspruch 1, **dadurch gekennzeichnet, dass** zur Sicherung eines elastischen Drucks auf die Seiten (***A***) und (***B***) des Sägebandes (**1**) radiale Kugellager (**15**),(**16**),(**17**) und (**18**), eine Zugfeder (**23**) mit starrer Kennlinie, zwei Stahlhebel (**9**) und (**10**), zwei gehärtete Stahlbolzen (**7**) und (**8**) und zwei Bronzebuchsen (**3**) und (**4**), verwendet werden.

3. Sägebandführung nach Anspruch 1 und Anspruch 2, **dadurch gekennzeichnet, dass** die gehärteten Stahlbolzen (**7**) und (**8**) aus zwei zylindrischen Zonen (**a**) und (**b**) gebildet sind und dass zwischen den Symmetrieachse der Zone (**a**) und der Symmetrieachse der Zone (**b**) eine Exzentrizität von 1,0 mm vorliegt.

4. Sägebandführung nach Anspruch 1, **dadurch gekennzeichnet, dass** Zwecks Durchführung eines kontinuierlichen Druckes und einer rotierenden Führung der Rückseite (**C**) des Sägebandes (**1**), die Sägebandführung mit einem Stahlkörper (**24**) versehen ist auf dem ein Radiallager (**28**) montiert ist auf dem ein gehärteter Stahlmantel (**31**) aufgepresst ist der in der Mitte einen radialen Führungskanal (***c***) hat.

5. Sägebandführung nach Anspruch 1 und Anspruch 4, **dadurch gekennzeichnet, dass** zur präzisen spielfreien Abstützung und Führung des Rückens (***C***) des Sägebandes (**1**) der Stahlkörper (**27**), drei austauschbare Ausführungen **(27a), (27b)** und **(27c),** derer Führungskanäle (***c***) Öffnungen von: 0,35 mm, 0,45 mm und 0,60 mm und Tiefen von 1,2 mm, aufweisen.
